# EUROPEAN PATENT APPLICATION

(11) **EP 1 513 328 A1**
(43) Date of publication of application: **09.03.2005**
(21) Application number: 03019969.9
(22) Date of filing: 03.09.2003
(51) Int. Cl.: H04M 1/64, H04M 1/725

(54) **Generation of answering messages in portable electronic devices**

(71) Applicant: Sony Ericsson Mobile Communications AB, 221 88 Lund (SE)
(72) Inventor: Risberg, Nils, 238 31 Oxie (SE); Malthe, Anders, 237 33 Bjärred (SE)
(74) Representative: Dahnér, Christer

(57) **Abstract**

The present invention is directed towards a method and a device for incoming call handling, in particular providing multimedia answering messages in a portable electronic device (10) such as a cellular phone.

## Description

### TECHNICAL FIELD OF THE INVENTION

The present invention relates to the field of incoming call handling, in particular generation of answering messages in portable electronic devices.

### DESCRIPTION OF RELATED ART

Portable electronic devices such as cellular phones of today provide incoming call handling for instance in the form of an "automatic answering machine", that instead of rejecting an incoming call if a user cannot answer, give the user a possibility to answer the incoming call from a calling party with a prerecorded answering message, typically a conventional voice message known per se, which may be a service provided by an operator or a feature locally provided in the portable device itself. In this way, the calling party receives an answering message instead of just receiving a dull no answer tone. There is also often provided a so-called "mailbox feature" that gives the possibility for the calling party to also leave a message when the portable electronic device is switched off, or when the called party does not answer the incoming call.

Today, customisation, for instance personalised ring tones, appearance of the portable device itself, and appearance of the display, is of greater and greater importance. This of course also applies at least in some way to incoming call handling. The user often composes his/her own personalised answering message, instead of using a default message provided for instance by the operator. Nevertheless, even if the answering message the calling party receives can be personalised to some extent, today it is still not possible to be even more customised to personal preferences including other features than voice even though multimedia messaging is known, for instance in third generation mobile communication, "3 G", which allows a user to also send and receive multimedia such as pictures and video sequences.

Thus, there is still a need to improve customisation of answering messages for portable electronic devices, in particular to fully adopt existing and future technology including also video sequences.

### SUMMARY OF THE INVENTION

The present invention is thus directed towards providing answering message generation for a portable electronic device that can be customised to personal preferences to a great extent including also video.

An object of the present invention is to include also video sequences for answering messages provided by a device for incoming call handling for a portable electronic device.

According to the solution of the present invention, this is achieved by a device for incoming call handling providing multimedia answering messaging for a portable electronic device. The device is provided in the portable electronic device.

According to a first aspect of the present invention, the object is achieved by a device for incoming call handling in a portable electronic device comprising:
- an answering message selection unit presenting a set of items of answering messages comprising at least one multimedia message that can be selected by a user,
- a first user input unit for allowing answering message selection by the user, and a control unit arranged to:
   provide the set of items of multimedia answering messages that can be selected by the user, and detect a selection by the user via a second user input unit, and
   change the answering message in dependence of the selections made by the user, wherein said device, if activated, is further arranged to answer an incoming call with said selected multimedia message.

A second aspect of the present invention is directed towards a device including the features of the first aspect further comprising a store selectable by a user for storing a multimedia message and wherein the control unit is further arranged to save the multimedia message in the store in dependence of a storing selection from the user.

A third aspect of the present invention is directed towards a device including the features of any one of the first to the second aspect, wherein said set of items of answering messages comprises a multimedia message provided by a camera unit located in the portable device.

A fourth aspect of the present invention is directed towards a device including the features of any one of the first to the second aspect, wherein said set of answering messages comprises a multimedia message provided by a downloadable multimedia message from the Internet.

A fifth aspect of the present invention is directed towards a device including the features of the seventeenth aspect further comprising activation presenting means.

A sixth aspect of the present invention is directed towards a device including the features of any one of the preceding aspects wherein said control unit is further arranged to receive and save a voice and/or video message locally in the portable device.

A seventh aspect of the present invention is directed towards a device including the features of the sixth aspect, wherein said received message is stored in the store.

An eight aspect of the present invention is directed towards a device including the features of the second aspect, wherein said multimedia message is stored in the store 30 by means of a direct route button 35 for recording and storing a local video message.

A ninth aspect of the present invention is directed towards a device including the features of any one of the preceding aspects, wherein said second user input unit is a confirmation key for a menu.

A tenth aspect of the present invention is directed towards a device including the features of the preceding aspects, wherein said device is activated by means of a soft-key.

An eleventh aspect of the present invention is directed towards a device including the features of the preceding aspects, further comprising activation indicating elements such as an icon on the display.

A twelveth aspect of the present invention is directed towards a device including the features of the preceding aspects, wherein the first user input unit is provided as at least one navigation key for navigating in a menu system of the device and the second user input unit is provided as at least one button normally used for confirmation in the menu system.

A thirteenth aspect of the present invention is directed towards a device including the features of the preceding aspects, wherein the device is a cellular phone, a PDA or a smart-phone.

A fourteenth aspect of the present invention is directed towards a device including the features of the preceding aspects, wherein the device is arranged to be voice controlled.

A fifteenth aspect of the present invention is directed towards a method of incoming call handling in a portable electronic device, comprising the steps of:
- on an answering message selection unit providing a list of items of answering messages comprising at least one multimedia message that can be selected by a user,
- awaiting a selection through user inputs from the user via a first user input unit,
- scrolling the list upon selction by means of said first user input unit,
- awaiting a selection through user inputs via a second user input unit, and
- changing message upon detection of selection.

The invention has many advantages. According to the first to the thirteenth aspect of the present invention, a user will be able to answer an incoming call with a locally prerecorded multimedia message such as a video message. This will give the user complete freedom to personalise his/her answering message, so that a calling party receives a personal multimedia message instead of receiving a dull busy tone or a simple traditional voice message. He will not have to restrict himself or herself to voice messaging only, but can benefit from multimedia possibilities for instance offered by 3G mobile communication. The invention can also be a perfect complement to traditional voice messages, but without its limitations. The invention has the further advantage that according to the following aspects, a remote caller has the possibility of leaving a voice or video message locally in the phone.

The invention is also very inexpensive to implement, because it can be implemented using the user input units already provided in the device and the video answering message function can be provided with just some extra software in addition to the messaging software already existing.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 shows a front view of a portable electronic device in the form of a cellular phone,
Fig. 2 shows a block schematic of the relevant parts according to an embodiment of the invention inside the phone in Fig. 1,
Fig. 3 shows a flow chart of a method according to an embodiment of the invention,

### DETAILED DESCRIPTION OF EMBODIMENTS

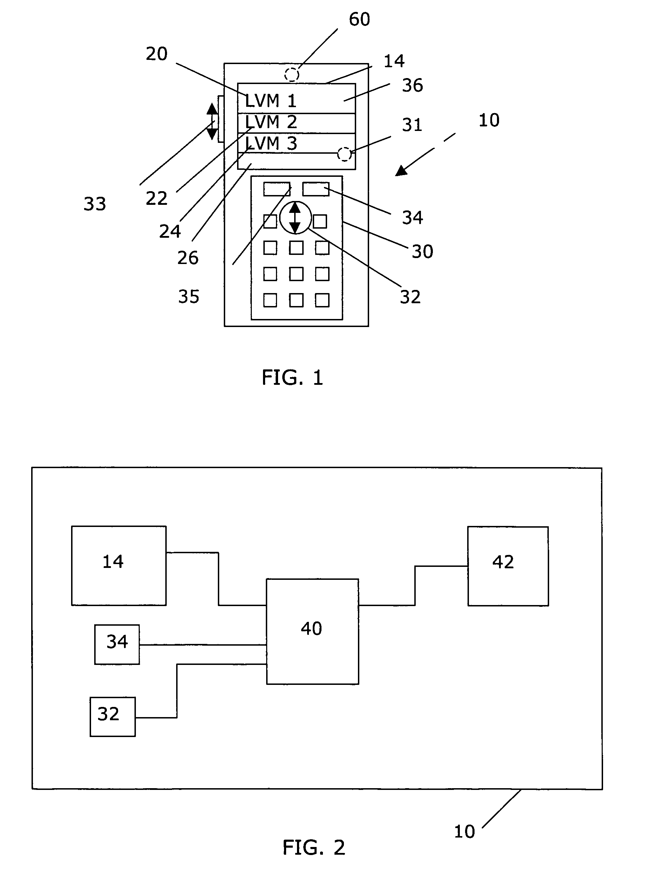

A portable electronic device into which the invention can be implemented is shown in Fig. 1, which here is a cellular phone shown in a front view. Preferably, the portable electronic device is a cellular phone 10 having a built-in camera (not shown in this figure) and provided for communication with other users via a network, an information presentation unit 14 in the form of a display, showing a set of items of prerecorded multimedia answering messages 20, 22, 24, 26 that can be selected by a user in a so-called "LVM" (Local video message) menu. Recording and storing an answering message will not be further described in more detail with reference to this drawing figure, since it is well known for the skilled person. Preferably, recording and storing a message can be performed in a manner known per se from the LVM menu, or in any other suitable way which enables easy and fast recording.

The cellular phone 10 further comprises a keypad 30 comprising first user input unit 32, herein in the form of a navigation key, for scrolling up and down in menus to highlight an item and a second user input unit 34 for selecting the highlighted item 20, 22, 24, 26. The navigation key 32 and the confirmation key 34, and the function thereof are known per se and will therefore not be further described. The first and second user input units 32, 34 may also be combined in the first user input unit 32, provided selection of an item 20, 22, 24, 26 can be made in some alternate way. Alternatively, or in addition, the first user input unit 32 can also be provided in a volume button 33. The volume button 33 can be actuated in an upward direction and in an opposite downward direction, which is indicated by an arrow pointing in both these directions in the figure.

Recording can also be provided by a soft button 31 on the display 14, or be activated by means of a direct route button 35, preferably located in a position suitable for taking pictures and video sequences, for instance in a joy-stick button by means of which a user easily can snap and save a video sequence of himself/herself for later application as an answering message.

The first user input unit 32 allows actuation for a first direction and a second opposite direction (illustrated by a double-headed arrow), each also allowing scrolling in said direction, wherein a control unit (shown in Fig. 2) in detecting a selection by actuation of the first input unit 32 to a selected item 20, 22, 24, 26 (typically by highlighting the same) and confirming the selection by the second input unit 34, for instance by pushing a key of the keypad 30, thereby activating a switch (not shown) in a way known per se.

Apart from making and receiving telephone calls, the keypad 30 can be used for entering further answering message information such as an accompanying text to a prerecorded video sequence to further improve customisation. It may also be possible to customise a video sequence by adding sounds and the like in a way known per se. Additional functions for instance for treating images and applications are typically selected by the navigation key 32, typically in the LVM menu, which key 32 can be used for navigating up and down through a LVM menu provided in the phone 10.

In the LVM menu, sets of items are provided in the form of lists. In Fig. 1 one such list 36 of items 20, 22, 24 is shown. The list 36 is here a list of locally prerecorded video sequence messages indicated by LVM1, LVM2, and LMV3, (for instance provided by a camera 60 in the device) but can also be a list comprising pre-recorded voice also, other multimedia answering messages, or downloadables from the Internet. Part of a fourth item (LVM 4) 26, which cannot be fully seen, is also shown for illustrative purposes.

Fig. 2 shows a block schematic of the different parts of the phone 10 relevant to the present invention. The display 14, the first user input unit 32 and the second user input unit 34 are here shown as separate boxes connected to a control unit 40. The control unit 40 is furthermore connected to a store 42.

The control unit 40 is normally provided in the form of one or more processors with corresponding program memories containing suitable software code, and the store 42 is preferably provided in the form of a memory known per se, for instance a semi-conductor memory.

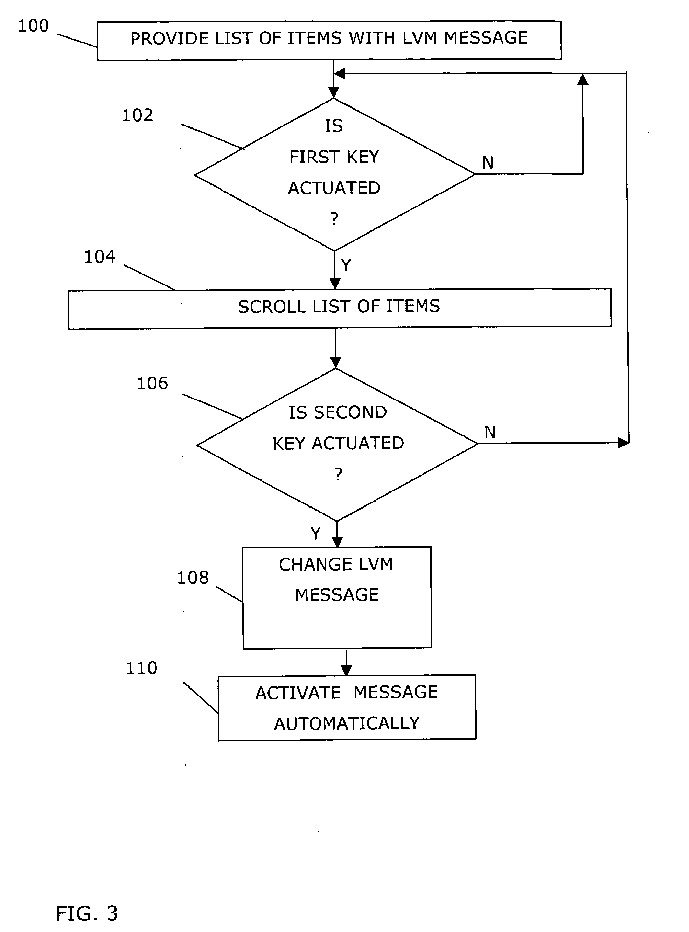

A preferred embodiment of the present invention will now be explained with reference to Fig. 1, 2 and 3.

In a menu, (it is assumed LVM menu for selecting answering messages is already selected in a way known per se) common for all multimedia answering messages types, upon the selection of a list of items in the menu system of the phone, the control unit 40 retrieves the list of items 20, 22, 24, 26 and presents it on the display 14, step 100. The control unit 40 thereafter awaits a selection through inputs from the user via the first input unit 32, in this case the navigation key. If the navigation key 32 is not actuated or depressed, the control unit 40 continues to wait, step 102. If however the navigation key 32 is actuated, step 104, the control unit 40 goes on and scrolls the list 31, step 104. This scrolling is performed as long as the navigation key 32 is actuated or depressed.

The navigation key 32 enables the possibility to navigate in an upward direction and in a downward direction as is indicated by the arrow pointing in two directions in Fig. 1. This means that if a lower part of the key 32 is depressed, scrolling is made downwards, while if an upper part is depressed scrolling is performed in a direction upwards.

If, step 106, a second input unit 34, typically a second key is not actuated, the control unit 40 goes back and monitors the navigation key, step 102. This method is then continued as long as the user is present in the menu having this list 31 and as long as he has not selected an item 20, 22, 24, 26 in the list 31.

When one of the items 20,22, 24, 26 has been selected, for instance by the user confirming selection by pushing on the second user input unit, 34, a second key, in a way known per se, answering message selection is detected, step 108, and changed in dependence of selections made by the user. At the same time, step 110 the answering message is activated, so that a short video message will be played back instantly if a call from a calling party is not accepted. The calling party receives a personal video message instead of a dull busy tone or a traditional voice message.

The calling party will benefit from the video message instead of the traditional ways of rejecting a call. Preferably, the video message is a perfect complement to traditional voice messages.

A user can activate the answering message function from a menu in a way known per se (c. f. Fig. 1 and thereto related description). The function can also be activated in other ways known per se. A typical example is by means of the soft-key 31.

Preferably, the activated function is presented as an icon in a way known per se.

Preferably, the user shall be able to activate the answering message function very easy and quickly (e. g. while entering a meeting). This could be done for instance by activating this function from a so-called "top-menu" or by means of the soft-key in a way known per se.

According to an embodiment of the invention, once the multimedia answering message function" has been activated, the phone does the following:
- answers to any incoming call (calling party) with an automatic video message, for instance the user saying "I am temporary not available. Please call me back in 13 minutes or leave a message after the tone".

The remote caller has the possibility of either leaving a message, or call back in a few minutes. Thereafter, according to an embodiment of the invention, the phone notifies that a call was automatically answered by displaying "received call" icon and by listing the calling number in the incoming call menu, the latter in a way known per se.

The video message is stored locally in the phone (not by the operator), typically in the store 42.

The present invention has many advantages. Common for all embodiments of the present invention, is that message preparation/handling is performed in the portable electronic device itself, not centrally by a system. Typically, the temporary unavailable function only works when the phone is switched on, and in presence of radio signal, and is not visible to the operator, to which it appears as a normal call that is answered.

The invention is also very inexpensive to implement. By providing the first user input unit with the navigation key, there is furthermore no need for any additional buttons or keys on the phone and the function can be provided with just some extra software in addition to the scrolling software already existing.

The present invention can be varied in many ways. The keys described were keys, where one key or button can be used for indicating two directions. It is of course also possible to provide this functionality with two separate keys or buttons instead. The navigation key was furthermore described in relation to providing navigation in only upwards and downwards directions. Naturally it is also possible to provide navigation sideways. The invention is of course not limited to these types of buttons or keys at all, but can be used with any keys provided on a device.

The invention was described in relation to a cellular phone. A cellular phone is just one example of a device in which the invention can be implemented. The invention can for instance also be used in a PDA (personal digital assistant), a palm top computer a lap top computer and a regular PC. Therefore the present invention is only to be limited by the following claims.

## Claims

1. Device (10) for incoming call handling in a portable electronic device comprising:
- an answering message selection unit (14) presenting a set of items (22, 24, 26, 28) of answering messages comprising at least one multimedia message that can be selected by a user,
- a first user input unit (32) for allowing answering message selection by the user, and a control unit (40) arranged to:
provide the set of items of multimedia answering messages that can be selected by the user, and detect a selection by the user via a second user input unit (34), and
change the answering message in dependence of the selections made by the user, wherein said device (10), if activated, is further arranged to answer an incoming call with said selected multimedia message.

2. Device according to claim 1, further comprising a store (42) selectable by a user for storing a multimedia message and wherein the control unit (40) is further arranged to save the multimedia message in the store (30) in dependence of a storing selection from the user.

3. Device according to claim 1 or 2, wherein said set of items (20, 22, 24, 26) of answering messages comprises a multimedia message provided by a camera unit (60) located in the portable device (10).

4. Device according to claim 1 or 2, wherein said set of answering messages comprises a multimedia message provided by a downloadable multimedia message from the Internet.

5. Device according to any one of the preceding claims, wherein said control unit (40) is further arranged to receive and save a voice and/or video message locally in the portable device (10).

6. Device according to claim 5, wherein said received message is stored in the store (42).

7. Device according to claim 3, wherein said multimedia message is stored in the store (42) by means of a direct route button (35) for recording and storing a local video message.

8. Device according to any one of the preceding claims, wherein said second user input unit (34) is a confirmation key for a menu.

9. Device according to any one of the preceding claims, wherein said device (10) is activated by means of a soft-key (31).

10. Device according to claim 1, wherein said device (10) is activated by means of said second user input unit (34).

11. Device according to any one of the preceding claims, further comprising activation indicating elements such as an icon on the display (14).

12. Device (10) according to any one of the preceding claims, wherein the first user input unit (32) is provided as at least one navigation key for navigating in a menu system of the device and the second user input unit (34) is provided as at least one button normally used for confirmation in the menu system.

13. Device (10) according to any of the previous claims, wherein the device (10) is a portable electronic communication device.

14. Device according to claim 21, wherein the device (10) is a cellular phone, a PDA or a smart-phone.

15. Device according to any one of the previous claims, wherein the device (10) is arranged to be voice controlled.

16. A method for incoming call handling in a portable electronic device, comprising the steps of:
- on an answering message selection unit (14) providing a list of items (20, 22, 24, 26) of answering messages comprising at least one multimedia message that can be selected by a user, step (100),
- awaiting a selection through user inputs from the user via a first user input unit (32), step (102)
- scrolling the list upon selction by means of said first user input unit, step (104),
- awaiting a selection through user inputs via a second user input unit (34), step (106), and
- changing message upon detection of selection, step (108).
